# EUROPÄISCHE PATENTANMELDUNG

(11) **EP 4 542 148 A1**
(43) Veröffentlichungstag der Anmeldung: **23.04.2025**
(21) Anmeldenummer: 23204688.8
(22) Anmeldetag: 19.10.2023
(51) Int. Cl.: F25D 23/00, B33Y 80/00, F17C 3/08, F25D 29/00

(54) **BAUTEIL MIT THERMISCHEM ISOLATIONSBEREICH**

(71) Anmelder: Siemens Aktiengesellschaft, 80333 München (DE)
(72) Erfinder: Kiener, Christoph, 81369 München (DE); Montalvo Beltran, Diego Alejandro, 10559 Berlin (DE); Küsters, Yves, 10829 Berlin (DE); Nicolai, Alexander, 12045 Berlin (DE)
(74) Vertreter: Siemens Patent Attorneys

(57) **Zusammenfassung**

Es wird ein additiv hergestelltes Bauteil (1) mit einem thermischen Isolationsbereich (10) angegeben, wobei das Bauteil (1) in dem Isolationsbereich (10) folgende Teilelemente aufweist:
- ein gasdichtes erstes Wandelement (11),
- ein vom ersten Wandelement (11) beabstandet verlaufendes gasdichtes zweites Wandelement (12), wobei in dem Zwischenraum zwischen dem ersten und dem zweiten Wandelement ein Vakuumraum (V) ausgebildet ist,
- eine zwischen dem ersten Wandelement (11) und dem zweiten Wandelement (12) angeordnete Gitterstruktur (20), welche monolithisch mit diesen beiden Wandelementen (11,12) in dem additiven Fertigungsverfahren gebildet ist,
- wobei der Vakuumraum (V) einen Verschlussbereich (40) aufweist, in welchem ein Verschlusselement (41,42) in eine Anschlussöffnung (13) des ersten oder zweiten Wandelements (12) eingesetzt ist und gasdicht mit diesem Wandelement (12) verbunden ist, wobei diese gasdichte Verbindung eine stoffschlüssige Verbindung ist.
Weiterhin wird ein Verfahren zur Herstellung eines solchen Bauteils (1) angegeben sowie ein Computerprogrammprodukt zur Auslegung eines solchen Bauteils (1).

## Beschreibung

Die vorliegende Erfindung betrifft ein Bauteil mit einem thermischen Isolationsbereich, wobei das Bauteil in dem Isolationsbereich zwei gasdichte Wandelemente und einen dazwischenliegenden Vakuumraum aufweisen. Weiterhin betrifft die Erfindung ein Herstellungsverfahren für ein solches Bauteil sowie ein Computerprogrammprodukt zur Auslegung eines solchen Bauteils.

Bauteile mit Vakuummänteln zur thermischen Isolation werden in vielfältigen Bereichen eingesetzt. So werden z.B. bei der Kryotechnik Gefäße benötigt, in denen Stoffe bzw. Vorrichtungen bei tiefen Temperaturen unterhalb von -150°C gehalten werden können. Hierfür werden häufig Dewar-Gefäße benutzt, um kryogene Flüssigkeiten wie flüssigen Stickstoff oder flüssiges Helium gekühlt zu halten. Ein doppelwandiger, evakuierter Bereich - also ein sogenannter Vakuummantel - dient bei solchen Gefäßen zur weitgehenden Unterbindung von Konvektion. Durch Begrenzung des direkten Materialkontakts zwischen Innenwand und Außenwand des Vakuumraums wird außerdem die Wärmeleitung zwischen einem Bereich innerhalb des Gefäßes und der äußeren Umgebung reduziert. Ein solcher Behälter wird häufig auch als Kryobehälter oder als Kryostat bezeichnet.

Innerhalb von solchen Vakuummänteln werden bei der Kryotechnik oft Superisolations-Folien eingesetzt, um einen dritten Mechanismus des Wärmetransports zu begrenzen, nämlich die Wärmestrahlung. Solche Superisolations-Folien werden im Englischen auch als Multilayer Insulation (MLI) bezeichnet. Sie umfassen typischerweise einen Stapel aus metallbedampften Kunststofffolien, die durch eine geeignete Perforation bzw. Abstandshalter auf Abstand gehalten werden. Die spiegelnden metallischen Schichten weisen eine geringe Strahlungsemission auf. Wenn ein solches mehrschichtiges System zwischen zwei Wänden eines Vakuumraums eingesetzt wird, behindert es die Wärmestrahlung darin. Die geometrische Auslegung des Folienstapels ist so, dass die Kontaktbereiche zwischen den einzelnen Schichten möglichst gering gehalten werden. Auf diese Weise werden z.B. hochwirksame thermische Isolationen für supraleitende Spulensysteme zur Verfügung gestellt.

Andere Anwendungen für flächige thermische Isolationsbereiche mit Vakuummänteln finden sich auch bei Raumtemperatur oder Hochtemperatur-Anwendungen. So werden z.B. Isolierkannen zum Warmhalten von Getränken und Speisen verwendet. Vakuumdämmplatten mit einem porösen Kernmaterial als Stützkörper für das Vakuum werden z.B. zur thermischen Isolation von Boilern oder von Gebäudewänden eingesetzt. Allgemein ist das dauerhafte Aufrechterhalten eines guten Vakuums in höheren Temperaturbereichen jedoch schwieriger, da hierfür weniger geeignete Materialsysteme zur Verfügung stehen.

Eine allgemeine Herausforderung bei der Herstellung vakuumisolierter Bauteile ist es, trotz des evakuierten Bereichs den mechanischen Anforderungen der jeweiligen Anwendung gerecht zu werden. Eine doppelwandige vakuumisolierte Hülle hält oft nur geringen Druckkräften stand, zumindest wenn das Wandsystem zur Begrenzung des lateralen Wärmetransports eine geringe Masse aufweist, also mit entsprechend dünnen Wandstärken ausgelegt ist.

Aufgabe der Erfindung ist es daher, ein Bauteil mit einem thermischen Isolationsbereich anzugeben, welches die genannten Nachteile überwindet. Insbesondere soll ein Bauteil zur Verfügung gestellt werden, bei welchem ein geringer Wärmetransport über diesen thermischen Isolationsbereich hinweg erreicht wird und welches trotzdem eine hohe mechanische Belastbarkeit aufweist. Insbesondere soll dies bei vergleichsweise geringem Materialeinsatz erreicht werden. Weiterhin soll ein Verfahren zur Herstellung eines solchen Bauteils angegeben werden und ein Computerprogramm zur Auslegung eines Bauteils zur Verfügung gestellt werden.

Diese Aufgaben werden durch das in Anspruch 1 beschriebene Bauteil, das in Anspruch 13 beschriebene Verfahren und das in Anspruch 15 beschriebene Computerprogrammprodukt gelöst.

Das erfindungsgemäße Bauteil ist ein additiv hergestelltes Bauteil, welches einen thermischen Isolationsbereich aufweist. In diesem Isolationsbereich umfasst das Bauteil die folgenden Teilelemente:
- ein gasdichtes erstes Wandelement,
- ein vom ersten Wandelement beabstandet verlaufendes gasdichtes zweites Wandelement, wobei in dem Zwischenraum zwischen dem ersten und dem zweiten Wandelement ein Vakuumraum ausgebildet ist,
- sowie eine zwischen dem ersten Wandelement und dem zweiten Wandelement angeordnete Gitterstruktur, welche monolithisch mit diesen beiden Wandelementen in dem additiven Fertigungsverfahren gebildet ist.
Dabei weist der Vakuumraum einen Verschlussbereich auf, in welchem ein Verschlusselement in eine Anschlussöffnung des ersten oder zweiten Wandelements eingesetzt ist und gasdicht mit diesem Wandelement verbunden ist, wobei diese gasdichte Verbindung eine stoffschlüssige Verbindung ist.

Das Bauteil oder zumindest die beschriebenen Wandelemente und die dazwischenliegende Gitterstruktur sind also mit einem additiven Herstellungsverfahren hergestellt. Ein solches additives Herstellungsverfahren wird häufig auch als generative Fertigung, auf Englisch als "additive Manufacturing" oder landläufig als "3D-Druck" bezeichnet. Eine additive Herstellung ermöglicht insbesondere eine einfache Erzeugung der innenliegenden Gitterstruktur auf vergleichsweise engem Raum. Ein besonderer Vorteil der additiven Fertigung besteht darin, dass das Doppelwandsystem in einer sehr komplexen Geometrie hergestellt werden kann, das heißt, dass die Ausgestaltung der vakuumisolierenden Bereiche nicht nur auf eine einfache doppelwandige Geometrie wie im Falle eines üblichen Isoliergefäßes beschränkt ist, sondern dass eine komplexe innenliegende Gitterstruktur erzeugt werden kann. Vorteilhaft sind nicht nur die beschriebenen Teilelemente in dem Isolationsbereich mit dem additiven Fertigungsverfahren hergestellt, sondern das gesamte Bauteil kann überwiegend mit einem additiven Fertigungsverfahren erzeugt sein. Dabei ist jedoch das Hinzufügen von bzw. die nachträgliche Verbindung mit konventionell herstellten Teilelementen allgemein nicht ausgeschlossen.

Der thermische Isolationsbereich mit dem Vakuumraum dient der thermischen Isolation von einem ersten Bereich gegenüber einem zweiten Bereich. Beispielsweise kann ein innenliegender Bereich des Bauteils thermischen gegenüber einem außenliegenden Bereich des Bauteils isoliert werden. Alternativ können aber auch zwei innenliegende Bereiche des Bauteils thermisch voneinander isoliert werden, oder es kann ein innenliegender Bereich des genannten Bauteils gegen einen innenliegenden Bereich eines anderen (z.B. hiermit in Verbindung) gebrachten Bauteils isoliert werden. Wesentlich ist nur, dass eine thermische Trennung zweier Bereiche durch den beschriebenen Vakuummantel erfolgt. Dabei kann der thermische Isolationsbereich insgesamt eine Superisolierung darstellen, also eine Wärmedämmung, deren Wärmeverluste durch die Fläche hindurch unterhalb von 0,026 W/(m-K) liegen. Die Vorteile der Erfindung werden aber prinzipiell auch schon bei schlechteren Wärmedämmungs-Werten des Isolationsbereichs (also bei höheren Wärmeverlusten) erreicht, beispielsweise bei Wärmeverlusten im Bereich von 0,026 W/(m·K) bis 0, 050 W/(m·K). Der Isolationsbereich kann allgemein flächig ausgebildet sein, d.h. die Dicke des Vakuumraums kann wesentlich geringer sein als seine laterale Ausdehnung. Dabei verläuft eine (gedachte) thermische Trennungsfläche durch das Zentrum des Wandsystems, für welche der Durchtritt von Wärme verringert werden soll. Diese Trennungsfläche muss jedoch keine ebene Fläche sein, sondern kann eine komplexe Kontur aufweisen. Sie kann also z.B. gewölbt sein und auch lokale Ecken und/oder Kanten aufweisen.

Die beiden genannten Wandelemente verlaufen beabstandet zueinander, das heißt sie kreuzen oder berühren sich innerhalb des flächigen Isolationsbereichs nicht. Lediglich in den Randbereichen des flächigen Isolationsbereichs sind sie gasdicht miteinander verbunden, so dass zwischen ihnen ein evakuierbarer Spalt ausgebildet ist. Die beiden Wandelemente können beispielsweise "parallel laufend" sein, in dem Sinne, dass ihre lokalen Tangentialflächen jeweils parallel zueinander verlaufen. Dementsprechend kann ihr Abstand im flächigen Isolationsbereich im Wesentlichen einheitlich sein, so wie dies bei einem Dewar-Gefäß typischerweise der Fall ist. Alternativ ist es aber auch möglich, dass der Abstand der beiden Wandelemente entsprechend den geometrischen und/oder thermischen Anforderungen lokal verringert oder erhöht ist.

Zumindest die beiden Wandelemente und die dazwischenliegende Gitterstruktur sind monolithisch miteinander ausgebildet. Unter dem Begriff "monolithisch verbunden" bzw. "monolithisch ausgebildet" wird dabei allgemein verstanden, dass das Bauteil bezüglich dieser Teilelemente einstückig ist, also aus einem Stück besteht. Diese monolithisch miteinander ausgebildeten Teilelemente werden gemeinsam in einem additiven Fertigungsverfahren gebildet. Alle genannten Bauteilbestandteile sind ohne Fügeverbindungen vorgefertigter Bauteile ausschließlich durch Materialübergänge miteinander verbunden, die beispielsweise durch Schmelzvorgänge oder diffusionsgesteuerte Sintervorgänge entstanden sind. Monolithische Bauteile bestehen in der Regel aus einem einheitlichen Material, beispielsweise aus einer bestimmten metallischen Legierung. Je nach additivem Herstellungsverfahren ist es jedoch auch möglich, monolithische Bauteile selektiv mit veränderten Materialzusammensetzungen zu erzeugen.

Die genannte Gitterstruktur ist innerhalb des Vakuumraums zwischen den beiden Wandelementen angeordnet. Diese Gitterstruktur kann allgemein als Stützgitter ausgebildet sein, also mit anderen Worten die beiden Wandelemente mechanisch gegeneinander abstützen. Hierzu kann sich die Gitterstruktur zwischen dem ersten und dem zweiten Wandelement erstrecken, also mit anderen Worten den Abstand zwischen den beiden Wandelementen vollständig überbrücken. Alternativ oder zusätzlich kann die Gitterstruktur dazu ausgebildet sein, die Wärmestrahlung zwischen den beiden Wandelementen zu reduzieren und somit den Wärmetransport durch den flächigen Isolationsbereich zu verringern. Mit anderen Worten kann die Gitterstruktur in ähnlicher Weise wie die einzelnen metallischen Lagen einer Superisolations-Folie wirken. Dies wird insbesondere durch die Wahl eines Materials mit geringer Strahlungsemission und insbesondere durch ein metallisches Material des monolithischen Verbunds begünstigt.

Um den zwischen den beiden Wandelementen liegenden Vakuumraum evakuieren zu können, weist eines der beiden Wandelemente eine Anschlussöffnung auf, in welche ein Verschlusselement eingesetzt ist und stoffschlüssig mit dem umgebenden Wandelement verbunden ist. Die stoffschlüssige Verbindung kann auf unterschiedliche Weise geschaffen sein, besonders vorteilhaft durch eine Lötverbindung. Wesentlich ist, dass durch den Stoffschluss eine gasdichte Verbindung geschaffen wird, so dass in dem Vakuumraum zwischen den beiden Wandelementen ein Vakuum dauerhaft gehalten werden kann. Das Vakuum kann dabei prinzipiell entweder während der Schaffung der stoffschlüssigen Verbindung ausgebildet ("gezogen") werden oder auch im Anschluss daran. Die zweite Variante ist vor allem dann geeignet, wenn das Verschlusselement eine Öffnung zur äußeren Umgebung aufweist, welche nachträglich verschlossen werden kann. In diesem Fall kann das Verschlusselement auch als Anschlusselement bezeichnet werden.

Die stoffschlüssige Verbindung zwischen dem Verschlusselement und dem umgebenden Wandelement ist insbesondere nachträglich ausgebildet, also nicht im Zuge des additiven Fertigungsverfahrens für den Aufbau des monolithischen Verbunds, sondern in einem nachgelagerten Prozessschritt. Dies kann insbesondere daran zu erkennen sein, dass in diesem Bereich ein zusätzliches Verbindungsmittel vorliegt und/oder dass die Schichtgeometrie eines schichtweise aufgebauten monolithischen Verbundes in diesem Bereich nachträglich verändert ist. In jedem Fall ist die beschriebene stoffschlüssige Verbindung separat von dem additiv gefertigten monolithischen Verbund ausgebildet.

Prinzipiell kann das Verschlusselement in ein beliebiges der beiden genannten Wandelemente eingesetzt sein. Beispielsweise kann das erste Wandelement ein innenliegendes, also zum Zentrum des Bauteils hin ausgerichtetes Wandelement sein, und das zweite Wandelement kann ein zur äußeren Umgebung hin liegendes Wandelement sein. Insbesondere kann das zweite Wandelement das erste Wandelement zur äußeren Umgebung hin lokal umhüllen. Dann ist es im Hinblick auf eine leichtere Fertigung vorteilhaft, wenn das Verschlusselement in das außenliegende zweite Wandelement eingesetzt ist. Der Vakuummantel muss jedoch allgemein keine außenliegende Wand sein, sondern es können auch zwei innenliegende Teilbereiche des Bauteils durch die vakuumisolierende Doppelwand thermisch getrennt sein. Dann ist es ausreichend, wenn die Doppelwand an einer Stelle lokal so weit nach außen geführt ist, dass das Einsetzen eines Verschlusselements in eines der beiden Wandelemente möglich ist.

Ein wesentlicher Vorteil des erfindungsgemäßen Bauteils liegt darin, dass durch den additiv gefertigten, monolithischen Aufbau der beiden Wandelemente und der innenliegenden Gitterstruktur auf einfache Weise ein gasdichter Vakuumraum geschaffen wird, bei dem sowohl (durch das Vakuum) die Konvektion wirksam eingedämmt ist als auch (durch die innenliegende Gitterstruktur) die Wärmestrahlung zwischen den beiden Wandelementen reduziert ist. Dies ist aufgrund des additiven Verfahrens bei vergleichsweise komplexem geometrischen Aufbau möglich, wobei der Materialeinsatz vorteilhaft gering gehalten werden kann. Eine dauerhafte vakuumdichte Abdichtung des Vakuumraums gegen die äußere Umgebung ist dabei durch die stoffschlüssige Verbindung zum nachträglich eingesetzten Verschlusselement gegeben. Die Gitterstruktur kann eine zusätzliche Stützfunktion aufweisen, wodurch im Vergleich zu einem leeren Hohlraum eine erhöhte mechanische Belastbarkeit des gesamten thermischen Isolationsbereichs gegeben ist.

Das erfindungsgemäße Verfahren dient zur Herstellung eines erfindungsgemäßen Bauteils und umfasst die folgenden Schritte:
a) additive Herstellung des ersten Wandelements, des zweiten Wandelements und der zwischen diesen beiden Wandelementen angeordneten Gitterstruktur in einem gemeinsamen Verfahrensschritt, so dass ein monolithischer Aufbau erzeugt wird,
b) Einsetzen des Verschlusselements in eine Anschlussöffnung des ersten oder zweiten Wandelements und
c) Ausbilden einer stoffschlüssigen gasdichten Verbindung zwischen dem Verschlusselement und dem umgebenden Wandelement.
Dabei kann insbesondere das Einsetzen des Verschlusselements gemäß Schritt b) nachgelagert zur additiven Herstellung des monolithischen Aufbaus gemäß Schritt a) erfolgen. Schritt c) kann entweder dem Schritt b) nachgelagert sein oder auch zumindest teilweise überlappend mit diesem erfolgen. Die Vorteile des erfindungsgemäßen Herstellungsverfahrens ergeben sich analog zu den oben beschriebenen Vorteilen des erfindungsgemäßen Bauteils.

Das erfindungsgemäße Computerprogrammprodukt umfasst Befehle, wobei die Befehle einen Computer bei der Ausführung des Computerprogrammprodukt dazu veranlassen, ein Verfahren zur Auslegung eines erfindungsgemäßen Bauteils auszuführen. Das Auslegungsverfahren umfasst die folgenden Schritte:
a) Bereitstellung eines physikalischen Modells für das Bauteil,
b) Festlegung eines Auslegungs-Parametersatzes mit wenigstens einem variablen geometrischen Auslegungs-Parameter für das Bauteil,
c) Festlegung von einem Zielwert für wenigstens eine physikalische Eigenschaft des Bauteils,
d) computergestützte Durchführung von wenigstens einer Simulation unter Verwendung des physikalischen Modells, wobei die wenigstens eine physikalische Eigenschaft des Bauteils in Abhängigkeit des Auslegungs-Parametersatzes berechnet wird,
d) Bestimmung von wenigstens einem geeigneten Auslegungs-Parametersatz im Hinblick auf die Erreichung des Zielwertes für die wenigstens eine physikalische Eigenschaft auf Basis der Simulation.

Die Vorteile des erfindungsgemäßen Computerprogrammprodukts liegen darin, dass sich die Auslegungs-Parameter damit computergestützt so festlegen lassen, dass der wenigstens eine Zielwert erreicht wird. Insbesondere kann ein günstiger Auslegungs-Parametersatz im Hinblick auf die gleichzeitige Erreichung bzw. Optimierung mehrerer Zielwerte aufgefunden werden. Hierzu kann in Schritt a) insbesondere ein digitales dreidimensionales Modell bereitgestellt werden. Dieses physikalische Modell kann z.B. geometrische, mechanische und thermische Zusammenhänge beschreiben und optional auch eine Vorhersage der Kosten in Abhängigkeit von der gewählten Geometrie und dem damit verbundenen Materialbedarf beinhalten. Die in Schritt b) festgelegten Auslegungs-Parameter können beispielsweise eine Anzahl und Dicke der vorliegenden Wände (erstes und zweites Wandelement sowie optional vorliegende Zwischenwände) beinhalten. Weiterhin können ein oder mehrere Strukturparameter der Gitterstruktur wie z.B. die Gitterkonstante(n) und/oder die Geometrie der zugrundeliegenden Elementarzelle der Gitterstruktur enthalten sein. Alternativ oder zusätzlich können Zusammensetzung und physikalische Eigenschaften des eingesetzten Materials enthalten sein. Als Randbedingungen für die Auslegung können bestimmte Designvorgaben enthalten sein (sogenannte Design Rules), welche z.B. in Abhängigkeit des gewählten additiven Fertigungsverfahrens bestimmte Grenzwerte für Wandstärken, Dicken von Gitterstreben und/oder Winkel von einzelnen Designelementen enthalten können. Diese Designvorgaben können feste Randbedingungen für die in b) festgelegten Auslegungs-Parameter bilden.

Die Festlegung des wenigstens einen Zielwerts in Schritt c) kann insbesondere durch eine Benutzer-Eingabe erfolgen, und es können beispielsweise mehrere Zielwerte angeben werden, wobei einerseits für bestimmte Eigenschaften starre Grenzen als feste Randbedingungen angegeben werden können und andererseits für manche Eigenschaften auch nur die Richtung einer gewünschten Optimierung angegeben werden kann (d.h. Minimierung oder Maximierung). Die mit dem Zielwert verknüpfte wenigstens eine physikalische Eigenschaft kann beispielsweise eine der folgenden Eigenschaften sein:
- eine mechanische Belastbarkeit des thermischen Isolationsbereichs, insbesondere des ersten und/oder zweiten Wandelements,
- ein Wärmefluss durch den flächigen thermischen Isolationsbereich hindurch, insbesondere lokal senkrecht zum Doppelwand-System aus dem ersten und zweiten Wandelement,
- ein lateraler Wärmefluss innerhalb der Fläche des flächigen thermischen Isolationsbereichs,
- ein vorhergesagter Materialbedarf und/oder mit der Fertigung verbundene Kosten,
- ein Raumbedarf für den thermischen Isolationsbereich,
- eine thermische Volumenausdehnung bei einem Betrieb des Bauteils,
- eine zeitliche Latenz bis zur Ausbildung eines thermischen Gleichgewichts bei einer Temperaturwechselbeanspruchung bei einem Betrieb des Bauteils.

Bei der Bestimmung von wenigstens einem geeigneten Auslegungs-Parametersatz wird zum einen sichergestellt, dass die vorgegebenen festen Grenzwerte eingehalten werden, und zum anderen kann eine Optimierung im Hinblick auf ein oder mehrere in Schritt c) festgelegte physikalische Eigenschaften erfolgen. Dabei kann eine Optimierung im Hinblick auf eine übergeordnete Kostenfunktion erfolgen, die von mehreren Eigenschaften abhängt, wobei ggf. ein Benutzer die Gewichtungen der einzelnen Eigenschaften vorgeben kann. Alternativ kann auch eine freie multi-kriterielle Optimierung erfolgen, bei der beispielsweise ein Benutzer eine Pareto-optimale Lösung aus einer sogenannten Pareto-Menge auswählen kann. In jedem Fall wird durch das erfindungsgemäße Computerprogrammprodukt ein Werkzeug zur Verfügung gestellt, mit dem ein Designer eines erfindungsgemäßen Bauteils computergestützt und mit vergleichsweise geringem Aufwand zu einer günstigen Auslegung des Bauteils im Hinblick auf die relevanten mechanischen und/oder thermischen Eigenschaften gelangen kann. Auch das entsprechende Verfahren zur Auslegung des Bauteils ist daher Teil der vorliegenden Erfindung.

Vorteilhafte Ausgestaltungen und Weiterbildungen der Erfindung gehen aus den von den Ansprüchen 1 und 13 abhängigen Ansprüchen sowie der folgenden Beschreibung hervor. Dabei können die beschriebenen Ausgestaltungen des Bauteils auch bei dem Fertigungsverfahren bzw. dem Computerprogrammprodukt realisiert werden, und umgekehrt.

Allgemein besonders vorteilhaft kann die stoffschlüssige Verbindung zwischen dem Verschlusselement und dem umgebenden ersten oder zweiten Wandelement eine Lötverbindung sein. Durch Löten kann auf einfache Weise eine dauerhaft gasdichte Verbindung zwischen zwei metallischen Körpern geschaffen werden. Dabei können die beiden zu verbindenden Körper (hier das Verschlusselement und das umgebende Wandelement) grundsätzlich artgleich oder artverschieden sein. Ein Lötverfahren ist in den Herstellungsprozess des additiv erzeugten Bauteils besonders gut zu integrieren, da der Lötschritt mit einem typischerweise ohnehin benötigten thermischen Nachbehandlungsschritt des additiv aufgebauten Formkörpers verbunden werden kann. Das verwendete Lotmaterial kann dabei auf die Prozesstemperatur eines solchen Nachbehandlungsschritts abgestimmt sein. Allgemein kann es sich bei dem Lotmaterial beispielsweise um ein Hochtemperaturlot mit einer Liquidustemperatur von über 900°C handeln. Alternativ können aber auch klassische Hartlote oder prinzipiell auch Weichlote zum Einsatz kommen.

Alternativ zu einer Lötverbindung kann die stoffschlüssige Verbindung aber auch durch Schweißen, Kleben oder ein gasdichtes Abquetschen unter hohem Quetschdruck geschaffen sein. Beim Schweißen ist das Elektronenstrahlschweißen unter Vakuum ein besonders geeignetes Verfahren. Beim Kleben kann es sich beispielsweise um ein Schmelzklebeverfahren handeln oder auch um ein reaktives Klebeverfahren, bei dem der Kleber unter Ablauf einer chemischen Reaktion aushärtet (wie beispielsweise bei einem Epoxid-Kleber).

Gemäß einer vorteilhaften Ausführung kann das erste Wandelement eine geringere Wandstärke aufweisen als das zweite Wandelement, und das Verschlusselement kann in dieses dickere, zweite Wandelement eingesetzt sein. Insbesondere kann das zweite Wandelement ein (bezüglich des Bauteil-Zentrums) weiter außenliegendes der beiden Wandelemente sein. Somit ist es für das Einsetzen des Verschlusselements leichter zugänglich als das innenliegende erste Wandelement. Das erste Wandelement kann eine Wandstärke in einem Bereich von 0,1 mm bis 2 mm aufweisen. Bei einer derart dünn ausgebildeten Wand kann auch der laterale Wärmefluss innerhalb der Wandfläche des ersten Wandelements vorteilhaft gering gehalten werden. Dies reduziert Wärmeverluste entlang dieser Fläche und hilft dabei, einen gewünschten Temperaturgradienten über diese Fläche hinweg aufrechtzuerhalten. Bei einem derart dünnen ersten Wandelement ist es möglich, dass dieses Wandelement alleine nicht ausreicht, um den bei der Anwendung des Bauteils auftretenden mechanischen Belastungen standzuhalten. In diesem Fall kann die innenliegende Gitterstruktur als Stützgitter ausgebildet sein, welches das erste Wandelement mechanisch gegen das dicker ausgebildete zweite Wandelement abstützt und dem Doppelwandsystem so insgesamt die nötige mechanische Festigkeit verleiht.

Allgemein vorteilhaft kann der monolithische Verbund aus dem ersten Wandelement, dem zweiten Wandelement und der dazwischen angeordneten Gitterstruktur aus einem metallischen Material gebildet sein. Ein metallisches Material und insbesondere eine metallische Legierung ist besonders geeignet, um einerseits einen dauerhaft abgedichteten Vakuumraum aufzubauen und andererseits die Wärmestrahlung zwischen den beiden Wandelementen mittels der innenliegenden Gitterstruktur vorteilhaft gering zu halten. Das metallische Material kann insbesondere ein Stahl sein oder eine Legierung, welches eines der folgenden Elemente als Hauptbestandteil aufweist: Nickel, Kobalt, Chrom, Kupfer, Titan, Aluminium oder ein refraktäres Metall wie z.B. Wolfram. Nickelbasislegierungen sind dabei im vorliegenden Zusammenhang besonders bevorzugt, da sie sehr korrosionsbeständig sind und eine hohe mechanische Festigkeit aufweisen, die über einen hohen Temperaturbereich erhalten bleibt. Somit eignen sich solche Legierungen (wie z.B. die unter dem Markennamen Inconel vertriebenen Legierungen) besonders für vakuumisolierte Bauteile, die für Hochtemperatur-Anwendungen ausgelegt sind.

Bei dem Herstellungsverfahren kann es sich allgemein um ein pulverbettbasiertes Verfahren handeln. Hiermit sind auf einfache Weise auch komplexe metallische Strukturen herstellbar. Geeignete Verfahren sind beispielsweise selektives Laserschmelzen (SLM) bzw. Laser Powder Bed Fusion (LPBF), selektives Lasersintern (SLS), Metal Binder Jetting, oder Electron Beam Melting (EBM). In einer anderen Ausgestaltungsform ist das additive Verfahren ein pastenbasiertes Sintermetallverfahren wie z.B. Mold Jetting.

Gemäß einer ersten vorteilhaften Ausführungsvariante des Verschlusselements kann dieses als Dichtkegel ausgebildet sein. Mit anderen Worten kann das Verschlusselement eine sich konisch verjüngende Außenfläche aufweisen, welche die Form eines Kegels oder Kegelstumpfes aufweist. Dementsprechend kann die Anschlussöffnung sich so zu einer Außenfläche des Bauteils hin konisch aufweiten, dass sie diesen Dichtkegel passend aufnehmen kann. Zwischen diesen beiden zueinander passförmigen konischen Flächen wird dann die stoffschlüssige Verbindung ausgebildet, wobei insbesondere der verbleibende schmale Restspalt zwischen den beiden Fügepartnern mit einem optionalen Fügemittel (z.B. einem Lotmaterial oder Klebematerial) aufgefüllt werden kann. Bei dieser Ausführungsform mit einer konischen Verbindungsfläche ist es besonders vorteilhat, wenn das Ausbilden der stoffschlüssigen Verbindung unter Vakuum ausgeführt wird, so dass das "Ziehen" des innenliegenden Vakuums bereits während der Ausbildung der gasdichten Verbindung erfolgt. Das Resultat des Fügeschrittes ist also bereits ein Bauteil mit evakuiertem innenliegenden Vakuummantel.

Gemäß einer zweiten vorteilhaften Ausführungsvariante kann das Verschlusselement aber auch als Rohrabschnitt ausgebildet sein. Dieser Rohrabschnitt kann insbesondere eine im Wesentlichen einheitliche Querschnittsfläche aufweisen, und auch die Anschlussöffnung kann eine dazu passende, im wesentlichen einheitliche Querschnittsfläche und Querschnittsform aufweisen. Es kann sich beispielsweise um ein kreiszylindrisches Rohr in einer kreiszylindrischen Öffnung handeln. Dies ist jedoch nicht zwingend erforderlich, und es sind auch andere zueinander passförmige Ausgestaltungen denkbar.

Der eingesetzte Rohrabschnitt kann insbesondere dazu ausgelegt sein, seinerseits gasdicht mit einem Vakuumsystem verbunden zu werden und/oder nach dem Ziehen eines Vakuums nach außen hin gasdicht abgedichtet zu werden. Hierzu kann der Rohrabschnitt beispielsweise ein Gewinde aufweisen. Dieses Gewinde kann ein Innen- oder Außengewinde sein und zur Verbindung des Rohrabschnitts mit einem Vakuumsystem dienen. Alternativ oder zusätzlich kann der Rohrabschnitt auch ein Gewinde aufweisen, über welches er mit einem dazu passenden Gewinde der Anschlussöffnung verbindbar ist. Eine solche formschlüssige Verbindung mit erhöhter Kontaktfläche kann zusätzlich zu der bereits beschriebenen gasdichten stoffschlüssigen Verbindung zwischen den beiden Fügepartnern vorliegen.

Allgemein vorteilhaft und unabhängig von der sonstigen Ausgestaltung des Verschlusselements kann das Bauteil im Verschlussbereich eine oberflächenvergrößernde Einrichtung im Bereich des Verschlusselements und/oder des ersten oder zweiten Wandelements (in welches das Verschlusselement eingesetzt ist) aufweisen. Eine solche oberflächenvergrößernde Einrichtung vergrößert die Kontaktfläche einer formschlüssigen Verbindung, welche zusätzlich zu der bereits beschriebenen stoffschlüssigen Verbindung der Fügepartner vorliegt. Dabei kann es sich beispielsweise um ein Innengewinde im Bereich der Anschlussöffnung handeln, welche passend zu einem Außengewinde des Verschlusselements ausgeführt ist. Alternativ oder zusätzlich können die beiden miteinander verbundenen Flächen eine Mehrzahl von Haken bzw. eine Mehrzahl von Schlaufen aufweisen, welche nach Art eines Klettverschlusses formschlüssig ineinandergreifen. Alternativ oder zusätzlich kann durch den additiven Herstellungsprozess im Verschlussbereich des betreffenden Wandelements eine Oberflächenrauheit im Bereich von Ra 10 µm bis Ra 50 µm (als Mittenrauwert) gegeben sein, welche somit die Kontaktfläche mit einem Fügemittel lokal erhöht. Auch das Anschlusselement kann vorteilhaft eine ähnliche Oberflächenrauheit aufweisen.

Gemäß einer allgemein vorteilhaften Ausgestaltung des Vakuumraums kann die innenliegende Gitterstruktur zusätzlich von wenigstens einer Zwischenwand durchsetzt sein. Diese Zwischenwand verläuft insbesondere so zwischen dem ersten Wandelement und dem zweiten Wandelement, dass sie zu beiden genannten Wandelementen beabstandet geführt ist. Es kann auch ein Stapel von solchen innenliegenden Zwischenwänden vorliegen, welche nicht nur zu den genannten Wandelementen, sondern auch untereinander beabstandet geführt sind. Es ergibt sich also insgesamt eine sandwichartige Lagenstruktur von ein oder mehreren Zwischenwänden, welche zwischen den außenliegenden beiden Wandelementen eingebettet sind. Das Vorliegen von solchen Zwischenwänden ist jedoch allgemein optional und es sind auch vorteilhafte Ausführungen denkbar, bei welchen keine Zwischenwand innerhalb der Gitterstruktur vorliegt. Wenn ein oder mehrere Zwischenwände vorhanden sind, ist es vorteilhaft, wenn diese auch Teil des monolithischen, additiv gefertigten Verbunds aus den Wandelementen und der Gitterstruktur sind. Die wenigstens eine innenliegende Zwischenwand ist dann ebenfalls vorteilhaft aus einem metallischen Material gebildet und erfüllt für die thermische Trennung eine analoge Funktion wie eine metallisch beschichtete Folie einer mehrlagigen Superisolation. Sie reduziert also die Wärmestrahlung zwischen dem ersten Wandelement und dem zweiten Wandelement. Dazu kann sie sich über einen überwiegenden Teil der lateralen Ausdehnung des Vakuumraums erstrecken und insbesondere im Wesentlichen lateral durchgehend sein.

Bei einer Ausführungsform mit einer oder mehreren Zwischenwänden ist es allgemein vorteilhaft, wenn die jeweilige Zwischenwand zu den jeweils benachbarten Wandelementen und/oder anderen benachbarten Zwischenwänden einen Wandabstand im Bereich zwischen 1 mm und 25 mm aufweist. Ein derartig dichter Schichtstapel aus Wandelementen und wenigstens einer innenliegenden Zwischenwand ist vorteilhaft, um die Wärmestrahlung durch den Schichtstapel wirksam zu begrenzen und gleichzeitig den Raumbedarf des gesamten Vakuummantel gering zu halten. Entsprechend liegt ein günstiger Abstand der beiden außenliegenden Wandelemente zueinander bei 2 mm bis 100 mm (auch wenn keine Zwischenwand enthalten ist). Die beschriebenen Wandabstände können über den flächigen Isolationsbereich entweder einheitlich oder räumlich variierend sein - je nachdem, ob z.B. ein einheitliches oder räumlich variierendes Temperaturprofil erwünscht ist.

Sofern wenigstens eine Zwischenwand vorliegt, kann sie vorteilhaft eine Wandstärke im Bereich zwischen 0,1 mm und 4 mm aufweisen, besonders bevorzugt zwischen 0,1 mm und 2 mm. Auch die Wandstärken der optionalen Zwischenwände sowie der außenliegenden Wandelemente können je nach erwünschtem Temperaturprofil entweder einheitlich oder räumlich variierend sein.

Bei Vorliegen von einer oder mehreren Zwischenwänden kann sich die Gitterstruktur gemäß einer ersten Ausführungsform ungestört über die jeweilige Zwischenwand hinweg erstrecken. Mit anderen Worten kann eine regelmäßige Gittergeometrie vorliegen und die jeweilige Zwischenwand kann ohne Störung des regelmäßigen Musters in diese Struktur eingesetzt sein bzw. diese Struktur überlagern. Diese Variante ist besonders vorteilhaft, um eine gute mechanische Abstützung zwischen den beiden äußeren Wandelementen mittels der Gitterstruktur zu erzielen.

Gemäß einer alternativen Ausführungsform kann die Gitterstruktur jedoch im Bereich von wenigstens einer Zwischenwand einen Versatz aufweisen. Mit anderen Worten kann die Gitterstruktur auf der einen Seite der betreffenden Zwischenwand gegenüber der anderen Seite der betreffenden Zwischenwand versetzt sein. Es kann sich dabei insbesondere um einen seitlichen Versatz des Gittermusters, also einen Versatz entlang der Wandebene handeln. Bei dieser Ausführungsform sind einzelne Gitterstreben der Gitterstruktur im Bereich einer solchen Zwischenwand lateral versetzt und setzen sich insbesondere nicht auf der gegenüberliegenden Seite der Zwischenwand kontinuierlich fort. Diese Variante ist besonders vorteilhaft, um eine wirksame Reduzierung der Wärmeleitung zwischen dem ersten und zweiten Wandelement durch die Gitterstruktur hindurch zu erreichen.

Allgemein vorteilhaft und unabhängig davon, ob Zwischenwände im Vakuumraum vorliegen, kann die Gitterstruktur einen Material-Füllgrad von weniger als 40%, besonders bevorzugt weniger als 20%, aufweisen. Der Material-Füllgrad ist der Volumenanteil im Bereich zwischen den einzelnen Wänden, welcher durch das Material der Gitterstruktur ausgefüllt wird. Ein Füllgrad im genannten Bereich ist vorteilhaft, um eine Wärmeleitung zwischen dem ersten Wandelement und dem zweiten Wandelement wirksam zu reduzieren. Für diese Reduktion ist ein möglichst geringer Füllgrad günstig, so dass für eine besonders gute thermische Isolation auch ein Füllgrad unterhalb von 10 % und sogar unterhalb von 5 % vorteilhaft sein kann. Wenn allerdings die Gitterstruktur auch als Stützgitter zur Abstützung von höheren mechanischen Kräften zwischen den beiden Wandelementen wirkt, dann kann sich ein Mindest-Füllgrad von beispielsweise 5 % oder sogar 10 % aus den mechanischen Anforderungen für diese Abstützung ergeben. Die mechanischen Anforderungen haben dann bei der geometrischen Auslegung der Gitterstruktur einen Vorrang gegenüber der Reduzierung des Wärmeflusses.

Allgemein kann die Gitterstruktur ein regelmäßiges Gitter darstellen bzw. durch Verwölbung aus einem regelmäßigen Gitter abgeleitet sein, um dieses an eine vordefinierte Form des ersten und/oder zweiten Wandelements anzupassen. Die Gitterkonstante kann dabei z.B. im Bereich der relevanten Wandabstände liegen oder kleiner als diese gewählt sein. Die Gitterstruktur kann beispielsweise ein Vollzellsystem oder auch ein Hohlgittersystem darstellen. Bei einem Vollzellsystem ist die Begrenzungswand zwischen einzelnen Elementarzellen des Gitters eine von Material ausgefüllte Fläche. Bei einem Hohlgittersystem enthält die Elementarzelle dagegen einen Hohlraum, welcher sich durch die Begrenzungsflächen zwischen den Elementarzellen durch das gesamte Gittersystem hindurch erstreckt. Ein Hohlgittersystem ist im Zusammenhang mit der vorliegenden Erfindung besonders bevorzugt, da sich damit insbesondere bei einem pulverbettbasierten Herstellungsverfahren eine effektive Entpulverung des gebildeten Formkörpers erreichen lässt.

Gemäß einer vorteilhaften Ausführungsform des Verfahrens wird die stoffschlüssige Verbindung durch einen Vakuum-Lötprozess ausgebildet. Dieser kann insbesondere mit einer ohnehin notwendigen thermischen Nachbehandlung des additiv hergestellten Formkörpers verknüpft werden. Beispielsweise kann gleichzeitig mit dem Vakuum-Lötprozess ein sogenanntes Spannungsfrei-Glühen des additiv hergestellten Verbundes erfolgen, welches typischerweise ebenfalls in einem Vakuumofen ausgeführt wird. Der Lötprozess kann allgemein bei einer Prozesstemperatur zwischen 300 °C und 1700 °C durchgeführt werden, wobei die spezielle Temperaturwahl von dem Material bzw. den Materialien der beiden Fügepartner abhängt. So kann beispielsweise beim Löten einer Nickelbasislegierung eine vorteilhafte Prozesstemperatur im Bereich von 600 °C bis 1300 °C zum Einsatz kommen. Für eine Kupferlegierung ist dagegen ein Temperaturbereich zwischen 400 °C und 800 °C besonders bevorzugt und bei einer Stahllegierung ein Temperaturbereich zwischen 600 °C und 1200 °C. Dabei muss die Prozesstemperatur während des Lötprozesses nicht konstant sein, sondern es kann ein stufenförmiges Profil mit mehreren Haltetemperaturen durchlaufen werden, bei welchen gleichzeitig die thermische Nachbehandlung erfolgt.

Allgemein und unabhängig von der Art der stoffschlüssigen Verbindung kann die Anschlussöffnung vor der Schaffung dieser Verbindung für eine Entpulverung des innenliegenden Vakuumraums genutzt werden. Hierzu liegt die Anschlussöffnung bevorzugt in einem Eckbereich oder zumindest ein einem Randbereich der Außenkontur des betreffenden Wandelement. Ein solcher Entpulverungsschritt ist insbesondere beim Einsatz eines pulverbettbasierten additiven Herstellungsverfahrens zweckmäßig. Falls ein oder mehrere Zwischenwände im Inneren des Vakuumraums vorliegen, können diese im Bereich bzw. in der Umgebung der Anschlussöffnung mit Ausnehmungen versehen sein, um eine Entpulverung auch in den Zwischenräumen zwischen den einzelnen Wänden des Wandstapels zu ermöglichen.

Bei der Ausbildung der stoffschlüssigen Verbindung kann das eingesetzte Verschlusselement mit einer von außen anliegenden Anpresskraft in die Anschlussöffnung eingepresst werden. Diese Anpresskraft kann beispielsweise durch einen von oben auf das Verschlusselement aufgelegten Beschwerungskörper bewirkt werden. Alternativ oder zusätzlich kann eine Ringmanschette und/oder eine Klemme vorgesehen sein, um das Verschlusselement in die Anschlussöffnung zu pressen. Die Ausführungsvariante mit einer Anpresskraft ist besonders bei Verwendung eines Dichtkegels als Verschlusselement vorteilhaft. Ein solcher Dichtkegel kann beispielsweise mit wesentlich einem Befestigungselement zur Befestigung eines Beschwerungskörpers, einer Klemme oder einer Ringmanschette versehen sein.

Der innenliegende Vakuumraum kann allgemein vorteilhaft während der Ausbildung der stoffschlüssigen Verbindung evakuiert werden. Dazu kann die Ausbildung der Verbindung insbesondere innerhalb eines Vakuumofens erfolgen. Das Vakuum kann vorteilhaft "gezogen" werden, bevor die Prozesstemperatur für den Fügeprozess erreicht wird. So kann ein vor dem Fügen vorhandener Restspalt zwischen den Fügepartnern genutzt werden, um den Vakuumraum zu entleeren, bevor die stoffschlüssige Verbindung geschaffen und der Vakuumraum gasdicht abgeschlossen wird.

Gemäß einer weiteren vorteilhaften Ausführungsform kann das Bauteil im Bereich der Anschlussöffnung wenigstens eine Tropfbarriere für ein Fügemittel der stoffschlüssigen Verbindung aufweisen, beispielsweise für ein Lot- oder Klebematerial. Eine solche Tropfbarriere kann beispielsweise eine Ringmanschette oder eine anders geartete Auffangwand sein, welche dazu ausgebildet ist, im Bereich der Anschlussöffnung herunterlaufendes flüssiges Fügemittel aufzufangen und von dem Zwischenraum zwischen dem ersten und dem zweiten Wandelement fernzuhalten.

Gemäß einer weiteren allgemein vorteilhaften Ausführungsform kann auch das Verschlusselement additiv gefertigt sein. Insbesondere kann es aus dem gleichen Material gefertigt sein wie der monolithische Verbund aus dem ersten Wandelement, dem zweiten Wandelement und der dazwischen angeordneten Gitterstruktur. Es kann gleichzeitig mit diesem monolithischen Verbund in einem gemeinsamen Fertigungsschritt und insbesondere in derselben Fertigungseinrichtung hergestellt werden. Beispielsweise kann es mit dem monolithischen Verbund zusammen auf einer gemeinsamen Grundplatte hergestellt sein. Dabei können je nach Form des Verschlusselements optional temporäre Stützstrukturen zum Einsatz kommen. Besonders bevorzugt ist es jedoch, wenn bei der additiven Fertigung auf solche Stützstrukturen verzichtet werden kann. Dies kann durch die Einhaltung entsprechender Auslegungsregeln ermöglicht werden.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung eines ersten Wandelements zeigt,
- Figur 2: eine schematische perspektivische Darstellung eines dazu passenden zweiten Wandelements zeigt,
- Figur 3: einen monolithischen Aufbau aus zwei Wandelementen und einer innenliegenden Gitterstruktur zeigt,
- Figur 4: eine Detailansicht eines solchen monolithischen Aufbaus zeigt,
- Figur 5: eine Detailansicht eines alternativen monolithischen Aufbaus zeigt,
- Figur 6: eine Detailansicht eines ähnlichen monolithischen Aufbaus im Bereich einer Anschlussöffnung zeigt,
- Figur 7: einen Verschlussbereich mit eingesetztem Dichtkegel zeigt,
- Figur 8: einen ähnlichen Verschlussbereich in perspektivischer Schnittdarstellung zeigt,
- Figur 9: einen Verschlussbereich mit einem eingesetzten Rohrabschnitt zeigt,
- Figur 10: einen schematischen Längsschnitt eines weiteren Rohrabschnitts im Verschlussbereich zeigt,
- Figur 11: einen schematische Längsschnitt der Verbindung im Verschlussbereich zeigt,
- Figur 12: einen anderen Verschlussbereich im schematischen Querschnitt zeigt und
- Figur 13: einen schematischen Längsschnitt eines weiteren Verschlussbereichs zeigt.

In den Figuren sind gleiche oder funktionsgleiche Elemente mit gleichen Bezugszeichen versehen.

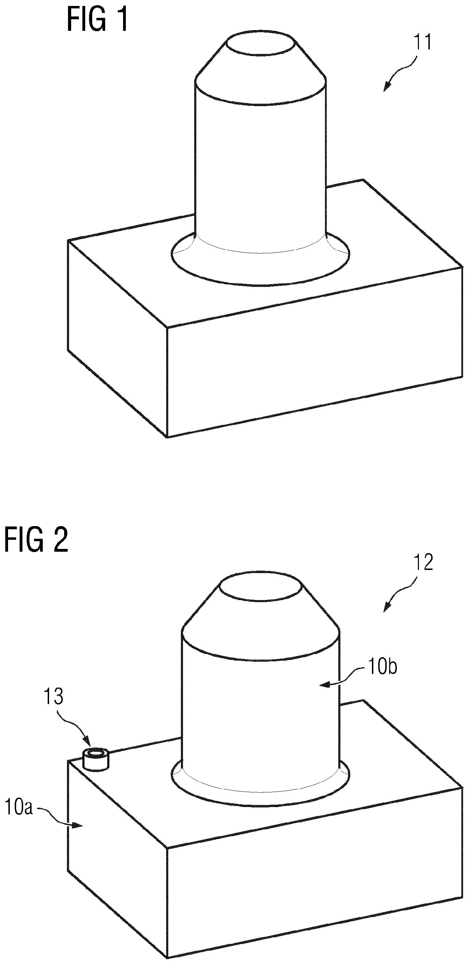

In Figur 1 ist eine schematische perspektivische Darstellung eines ersten Wandelements 11 gezeigt, wie es in einem Bauteil gemäß der Erfindung zum Einsatz kommen kann. Dieses erste Wandelement 11 ist ein innenliegendes Wandelement eines doppelwandigen Vakuumraums. Das Doppelwand-System wird in einem additiven Fertigungsverfahren monolithisch aufgebaut, so dass das erste Wandelement 11 auch während der Fertigung des Bauteils niemals als eigenständiges Element vorliegt, so wie es in Figur 1 gezeigt wird. Vielmehr handelt es sich bei dieser Darstellung um eine Ansicht des innenliegenden ersten Wandelements 11, wie es als Design-Element in einem übergeordneten CAD-Datensatz vorliegen kann.

In Figur 2 ist eine schematische perspektivische Darstellung eines zum ersten Wandelement 11 aus Figur 1 passenden zweiten Wandelements 12 gezeigt. Dieses zweite Wandelement 12 ist so geformt, dass es das erste Wandelement 11 umhüllt und dabei einen innenliegenden Zwischenraum mit annähernd gleichbleibendem Abstand ausbildet. Durch dieses Doppelwandsystem ist ein flächiger thermischer Isolationsbereich gebildet, durch welchen das Bauteil thermisch von der äußeren Umgebung isoliert wird. Unter "flächig" ist hierbei zu verstehen, dass der Isolationsbereich aus einer Mehrzahl von flächigen Elementen zusammengesetzt ist, z.B. hier einer Mehrzahl von ebenen Teilbereichen 10a der Wandelemente im quaderförmigen Sockel, einem darüber angeordneten kreiszylindrischen Teilbereich 10b sowie weiteren hier nicht näher bezeichneten flächigen Elementen. Insgesamt muss der thermische Isolationsbereich also keine ebene Fläche darstellen, sondern nur einen Wärmetransport durch eine gedachte Trennungsfläche hindurch reduzieren, wobei diese Trennungsfläche mittig im innenliegenden Vakuumraum verläuft. Das zweite Wandelement 12 der Figur 2 weist in einem seiner Eckbereiche eine Anschlussöffnung 13 auf. In diese Anschlussöffnung 13 kann ein Verschlusselement eingesetzt werden und stoffschlüssig mit dem zweiten Wandelement 12 verbunden werden, um den innenliegenden Vakuumraum gasdicht abzudichten.

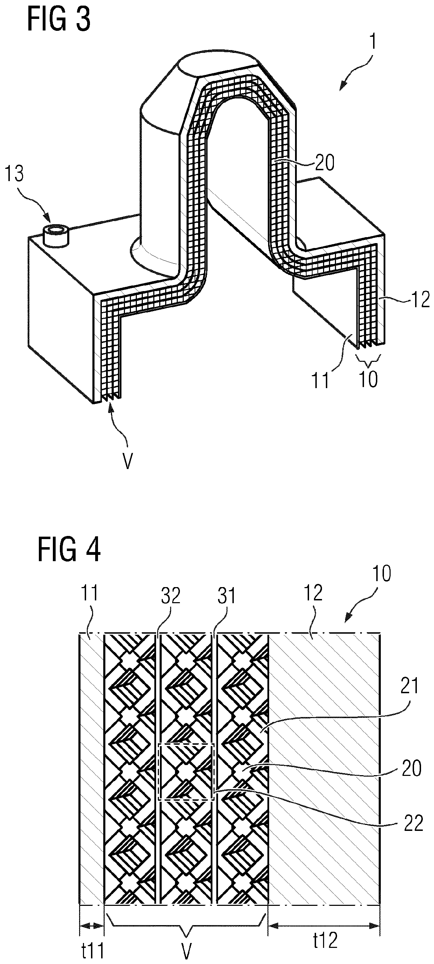

In Figur 3 ist ein perspektivischer Teilschnitt eines monolithischen Aufbau aus zwei solchen Wandelementen 11,12 und einer innenliegenden Gitterstruktur 20 gezeigt. Dieser monolithische Aufbau kann aus einer metallischen Legierung gebildet sein und beispielsweise mit einem pulverbettbasierten additiven Fertigungsverfahren gemeinsam aufgebaut sein. Der Vakuumraum zwischen den beiden Wandelementen 11,12 ist hier mit V bezeichnet. Er wird von einer der innenliegenden Gitterstruktur 20 durchdrungen, so dass sich neben den evakuierten Hohlräumen auch mit dem metallischen Material gefüllte Volumenbestandteile in dem Innenraum ergeben. Der insgesamt gebildete thermische Isolationsbereich ist hier mit 10 bezeichnet. Er weist insgesamt eine komplex geformte Kontur auf, wie bereits im Zusammenhang mit Figur 2 beschrieben. Im gezeigten Beispiel liegt der thermische Isolationsbereich 10 auf der Außenseite des gesamten Bauteils 1, so dass hiermit eine thermische Trennung der inneren Bereiche des Bauteils von der äu-ßeren Umgebung erreicht wird.

In Figur 4 ist eine Detailansicht des monolithischen Aufbaus gezeigt, welche einem Wandbereich aus dem linken Teil der Figur 2 entspricht. Der zwischen den beiden Wandelementen 11 und 12 liegende Vakuumraum V ist wie bereits beschrieben von einer Gitterstruktur 20 durchsetzt. Zusätzlich zu dieser Gitterstruktur 20 ist der Vakuumraum V hier von zwei Zwischenwänden 31, 32 durchsetzt, welche jeweils voneinander und von den begrenzenden Wandelementen 11, 12 beabstandet sind. Diese Zwischenwände 31, 32 sind allgemein optional und hier vergleichsweise dünn ausgebildet. Sie sind ebenfalls Teil des monolithischen Aufbaus und dienen der zusätzlichen thermischen Trennung, indem sie die Wärmestrahlung zwischen den beiden Wandelementen 11 und 12 reduzieren. Auch die Gitterstruktur 20 kann hierzu beitragen, wobei sie außerdem eine mechanische Abstützung der beiden Wandelemente 11 und 12 gegeneinander bewirkt. Beim gezeigten Beispiel weist das außenliegende Wandelement 12 eine höhere Wandstärke t12 auf als die Wandstärke t11 des innenliegenden ersten Wandelements 11. Die Wandstärke t11 kann beispielsweise in einem Bereich von nur 0,1 mm bis 2 mm liegen. Eine derart dünne Innenwand 11 wird durch die mechanische Abstützung mittels der Gitterstruktur 20 ermöglicht.

Im gezeigten Teilbereich der Figur 4 kann die Gitterstruktur 20 durch regelmäßige Wiederholung aus einer Elementarzelle 22 abgeleitet werden. Über den gesamten thermischen Isolationsbereich 10 gesehen kann die Gitterstruktur 20 jedoch auch Bereiche aufweisen, in denen die Regelmäßigkeit des Gitters lokal verzerrt ist, um z.B. durch lokale Streckung, Stauchung und/oder Verwölbung eine gewünschte Kontur nachzubilden. In diesem Sinne kann die Gitterstruktur 20 von einem regelmäßigen Gittersystem abgeleitet sein. Im gezeigten Beispiel handelt es sich um ein Hohlgittersystem, bei welchem sich zwischen einzelnen Gitterstreben 21 ein ausgedehnter Hohlraum befindet. Dieser Hohlraum erstreckt sich jeweils zwischen dem entsprechenden Paar von benachbarten Begrenzungswänden 11, 31, 32 bzw. 12.

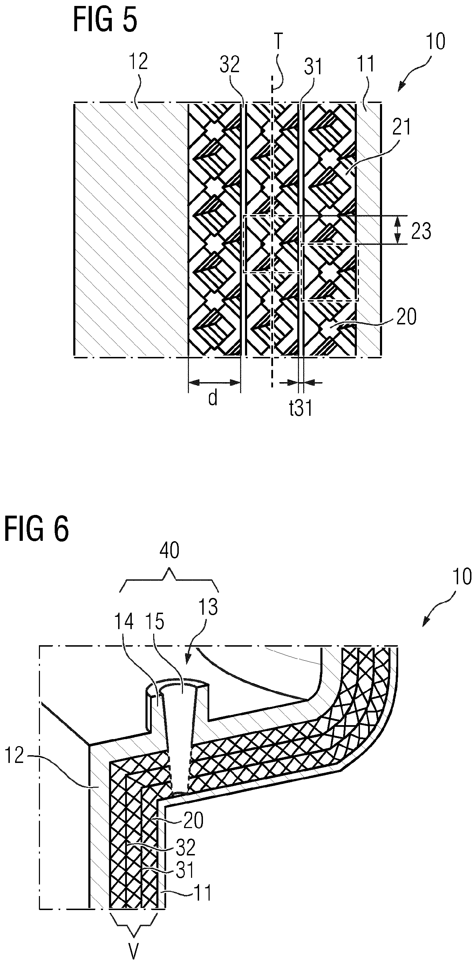

In Figur 5 ist eine ähnliche Ansicht eines weiteren monolithischen Aufbaus in einem thermischen Isolationsbereich 10 gezeigt. Der Aufbau ist insgesamt ähnlich zum Beispiel der Figur 4, allerdings ist die Regelmäßigkeit der Gitterstruktur im Bereich der ersten Zwischenwand 31 unterbrochen. An dieser ersten Zwischenwand 31 besteht ein seitlicher Versatz 23 zwischen der Anordnung der Elementarzellen auf der einen Seite der Zwischenwand 31 im Vergleich zur anderen Seite der Zwischenwand 31. Durch diesen Versatz 23 wird erreicht, dass die einzelnen Gitterstreben 21 sich nicht durch diese Zwischenwand 31 hindurch erstrecken. Vielmehr setzen sie auf der anderen Wandseite an einer anderen Stelle an, was insgesamt den Wärmeleitungspfad zwischen den beiden Wandelementen 11 und 12 wirksam reduziert. Auch im Bereich der zweiten Zwischenwand 32 kann optional ein solcher Versatz gegeben sein. Der Wandabstand zwischen den jeweils benachbarten Wänden des mehrlagigen Aufbaus ist hier im übrigen mit d bezeichnet und ist in diesem Beispiel sowohl über den Schichtstapel hinweg als auch über die gesamte Kontur des Schichtsystems einheitlich gewählt. Ähnliches gilt für die Wandstärke der Zwischenwände, die hier mit t31 bezeichnet ist. Die gedachte thermische Trennungsfläche, welche mittig innerhalb des Vakuumraums V verläuft, ist hier mit T bezeichnet.

In Figur 6 ist eine Detailansicht eines ähnlichen monolithischen Aufbaus in einem Verschlussbereich 40 des Vakuumraums V gezeigt. Der Schichtaufbau aus den beiden Wandelementen 11 und 12, der innenliegenden Gitterstruktur 20 und den optionalen Zwischenwänden 31 und 32 ist ähnlich wie beim Beispiel der Figur 4. In dem Verschlussbereich 40 weist das zweite Wandelement 12 eine Anschlussöffnung 13 auf, in welche ein Verschlusselement gasdicht eingesetzt werden kann. Im Bereich der Anschlussöffnung weist das zweite Wandelement 12 eine Ausstülpung 14 mit zylindrischer Außenkontur auf. Im Inneren der Ausstülpung 14 liegt eine konisch nach innen zulaufende Ausnehmung 15 vor, in welche beispielsweise ein Dichtkegel zum gasdichten Verschließen der Anschlussöffnung 13 eingesetzt werden kann. Die konisch zulaufende Ausnehmung 15 erstreckt sich hier über den gesamten innenliegenden Schichtstapel aus Gitterstruktur 20 und Zwischenwänden 31 und 32. Dies bewirkt, dass ein übergeordneter innerer Hohlraum gebildet ist, welcher im Verschlussbereich 40 die einzelnen parallel verlaufenden Hohlräume über die Zwischenwände 31 und 32 hinweg lokal verbindet. Der Effekt dieser lokalen Unterbrechung des Wand- und Gittersystems ist, dass ein nach der additiven Fertigung verbleibendes pulverförmiges Ausgangsmaterial durch die Anschlussöffnung hindurch entleert werden kann. Mit anderen Worten kann der gesamte Vakuumraum V nach der additiven Herstellung des monolithischen Formkörpers über die Anschlussöffnung 13 entpulvert werden, bevor hier ein passendes Verschlusselement eingesetzt wird.

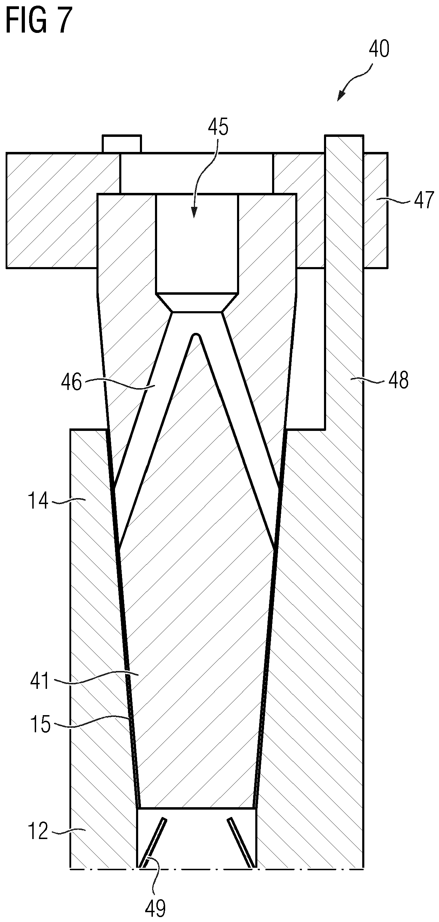

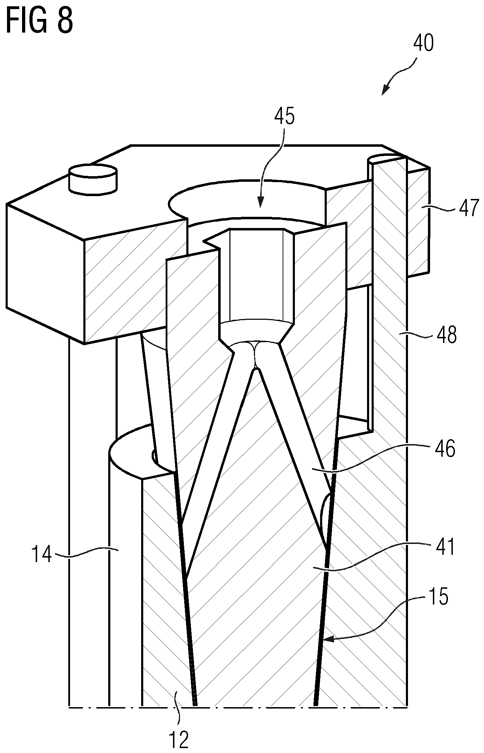

Figur 7 zeigt einen ähnlichen Verschlussbereich 40 in schematischer Schnittdarstellung, bei welchem ein Dichtkegel 41 in eine entsprechende konische Ausnehmung 15 in einer Ausstülpung 14 des zweiten Wandelements 12 eingesetzt ist. In Figur 8 ist eine perspektivische Schnittdarstellung dieses Verschlussbereichs 40 gezeigt. Der Dichtkegel 41 ist hier mit dem umgebenden Wandelement 12 stoffschlüssig verbunden, beispielsweise durch eine Lötverbindung. Um diese auszubilden, weist der Dichtkegel 41 ein Lotreservoir 45 auf, welche hier gleichzeitig als Werkzeugaufnahme (z.B. für einen Inbusschlüssel) ausgebildet sein kann. Das Lotreservoir 45 ist über innenliegende Lotmittelkanäle 46 mit dem Spalt zwischen den beiden Fügepartnern 41 und 12 verbunden, so dass nach einer Erwärmung (z.B. im Vakuumofen) Lotmittel in diesen Spalt einfließen kann. Um ein Eintropfen von Lotmittel in den Vakuumraum zu verhindern, kann das zweite Wandelement 12 im unteren Bereich seiner Anschlussöffnung mit einer Tropfbarriere 49 ausgestaltet sein. Diese Tropfbarriere 49 kann beispielsweise ein ringförmig umlaufende angeschrägte Wand sein, wodurch eine Auffangrinne für das flüssige Lotmittel entsteht. Zweckmäßig wird der Dichtkegel 41 während des Lötvorgangs in die konische Ausnehmung 15 eingepresst. Hierzu kann der Dichtkegel 41 über eine Ringmanschette 47 an das zweite Wandelement 12 angepresst werden. Die Ringmanschette 47 kann dazu über ein oder mehrere Befestigungselemente 48 an dem zweiten Wandelement 12 befestigt werden. Alternativ zu dieser Ausführungsvariante kann der Dichtkegel aber auch z.B. über einen aufgelegten Beschwerungskörper mit Hilfe der Schwerkraft in die konische Ausnehmung eingepresst werden.

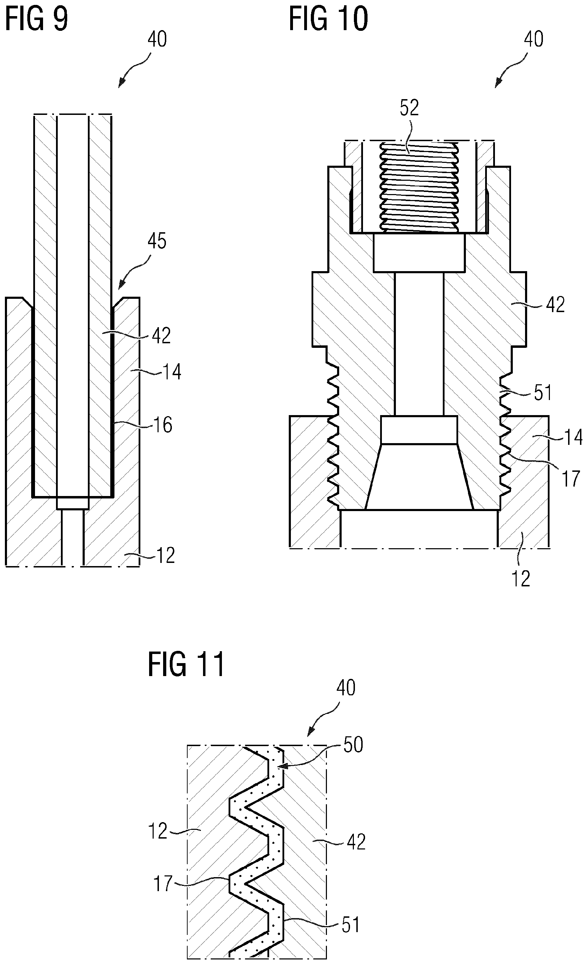

Figur 9 zeigt eine alternative Variante eines Verschlussbereichs 40 in schematischer Schnittdarstellung. Im Unterschied zum vorherigen Beispiel ist hier ein zylindrischer Rohrabschnitt 42 als Verschlusselement in eine passende zylindrische Ausnehmung 16 des zweiten Wandelements 12 eingesetzt. Auch hier ist eine gasdichte stoffschlüssige Verbindung zwischen den beiden Fügepartnern 12 und 42 durch ein Lotmittel ausgebildet. Dazu kann das Lotmittel aus einem Lotreservoir 45 in den Spalt zwischen den Fügepartnern eingeflossen sein, wobei das Lotreservoir 45 den Rohrabschnitt 40 hier ringförmig umschließt. Durch den offenen innenliegenden Hohlraum des Rohrabschnitts 40 ist bei dieser Variante durch das Einlöten noch keine endgültige gasdichte Abdichtung des Vakuumraums ausgebildet. Vielmehr kann über den Rohrabschnitt 40 nachträglich ein Vakuum gezogen werden, und die außenliegende Öffnung des Rohrabschnitts 40 kann dann anschließend gasdicht verschlossen werden - beispielsweise durch Abquetschen, durch Schließen eines Ventils oder durch sonstige nachträgliche Verbindung mit einem gasdichten Dichtelement.

Figur 10 zeigt ein weiteres Beispiel für einen Verschlussbereich 40, in dem ein Rohrabschnitt 42 in eine außenliegende Ausstülpung 14 des zweiten Wandelements 12 eingesetzt ist. Bei diesem Beispiel weist der Rohrabschnitt 42 in seinem au-ßenliegenden Endbereich ein Innengewinde 52 auf, über welches er mit Standard-Vakuumverbindungen gasdicht mit einer Vakuumpumpe verbunden und anschließend gasdicht abgedichtet werden kann. In seinem dem Wandelement 12 zugewandten Endbereich weist der Rohrabschnitt 42 ein Außengewinde 51 auf, welches passend zu einem Innengewinde 17 des zweiten Wandelements 12 ausgestaltet ist. Figur 11 zeigt eine entsprechende Detailansicht der stoffschlüssigen Verbindung, die über das Gewinde hinweg zwischen den beiden Fügepartnern 12 und 42 ausgebildet ist. Die stoffschlüssige Verbindung wird wiederum durch ein Lotmittel 50 ausgebildet, welches den Spalt zwischen den beiden zueinander passenden Gewinden 17 und 51 ausfüllt. Durch diese Gewinde 17 und 51 wird die Kontaktfläche im Fügebereich vergrößert, und es wird ein zusätzlicher Formschluss zwischen den beiden Fügepartnern ausgebildet. Insgesamt wird damit eine zuverlässigere gasdichte Abdichtung erreicht als bei einer stoffschlüssigen Verbindung von glatten Wänden.

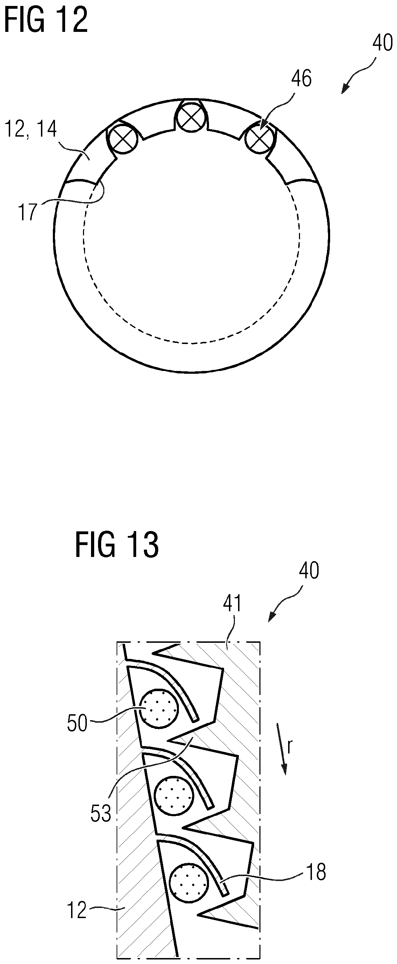

In Figur 12 ist ein ähnlicher Verschlussbereich 40 im schematischen Querschnitt gezeigt, also quer zu einer Zylinderachse einer kreiszylindrischen Anschlussöffnung im zweiten Wandelement 12. Der eingesetzte Rohrabschnitt ist hier der Übersichtlichkeit halber nicht dargestellt. Ähnlich wie beim vorhergehenden Beispiel sind das Wandelement 12 und der Rohrabschnitt mit zueinander passenden Gewinden ausgestaltet, wobei hier nur das Innengewinde 17 des Wandelements 12 auf einem Teilbereich des Umfangs dargestellt ist. In Richtung der Zylinderachse erstrecken sich hier längliche Ausnehmungen durch dieses Innengewinde, wobei diese Ausnehmungen als Lotmittelkanäle 46 wirken und entsprechend das Lotmittel in axialer Richtung in das Gewindesystem hineinleiten, so dass eine Befüllung des gesamten Gewindespalts mit Lotmittel erfolgen kann.

In Figur 13 ist ein schematischer Längsschnitt eines weiteren Verschlussbereichs 40 gezeigt, in welchem die Kontaktfläche zwischen den beiden Fügepartnern 12 und 41 durch andere Mittel vergrößert ist. In diesem Beispiel ist das zweite Wandelement 12 wiederum mit einem konisch geformten Dichtkegel 41 stoffschlüssig verbunden, wobei der Dichtkegel 41 entlang einer Bewegungsrichtung r in eine passende konische Ausnehmung des zweiten Wandelements 12 eingesetzt wird. Das zweite Wandelement 12 weist eine Mehrzahl von Laschen 18 auf, und der Dichtkegel 41 weist eine Mehrzahl von Widerhaken 53 auf. Beim Einsetzen des Dichtkegels 41 entlang der Bewegungsrichtung r greifen die Laschen 18 und die Widerhaken 53 ineinander, so dass eine formschlüssige Verbindung nach Art eines Kletterverschlusses ausgebildet wird. Der verbleibende Zwischenraum wird anschließend mit Lotmittel 50 befüllt, wobei wiederum die für die Verbindung zur Verfügung stehende Kontaktfläche im Vergleich zu einer glatten Wand vergrößert ist.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

### Bezugszeichenliste

- 1: Bauteil
- 10: thermischer Isolationsbereich
- 10a: ebener Teilbereich
- 10b: kreiszylindrischer Teilbereich
- 11: erstes Wandelement
- 12: zweites Wandelement
- 13: Anschlussöffnung
- 14: Ausstülpung
- 15: konische Ausnehmung
- 16: zylindrische Ausnehmung
- 17: Innengewinde
- 18: Laschen
- 20: Gitterstruktur
- 21: Gitterstrebe
- 22: Elementarzelle der Gitterstruktur
- 23: seitlicher Versatz
- 31: erste Zwischenwand
- 32: zweite Zwischenwand
- 40: Verschlussbereich
- 41: Verschlusselement (Dichtkegel)
- 42: Verschlusselement (Rohrabschnitt)
- 45: Lotreservoir
- 46: Lotmittelkanal
- 47: Ringmanschette
- 48: Befestigungselement
- 49: Tropfbarriere
- 50: Verbindungsmittel (Lotmittel)
- 51: Außengewinde
- 52: Innengewinde
- 53: Widerhaken
- d: Wandabstand
- r: Bewegungsrichtung
- t11: Wandstärke des ersten Wandelements
- t12: Wandstärke des zweiten Wandelements
- t31: Wandstärke der ersten Zwischenwand
- T: thermische Trennungsfläche
- V: Vakuumraum

## Patentansprüche

1. Additiv hergestelltes Bauteil (1) mit einem thermischen Isolationsbereich (10), in dem das Bauteil (1) folgende Teilelemente aufweist:
- ein gasdichtes erstes Wandelement (11),
- ein vom ersten Wandelement (11) beabstandet verlaufendes gasdichtes zweites Wandelement (12), wobei in dem Zwischenraum zwischen dem ersten und dem zweiten Wandelement ein Vakuumraum (V) ausgebildet ist,
- eine zwischen dem ersten Wandelement (11) und dem zweiten Wandelement (12) angeordnete Gitterstruktur (20), welche monolithisch mit diesen beiden Wandelementen (11,12) in dem additiven Fertigungsverfahren gebildet ist,
- wobei der Vakuumraum (V) einen Verschlussbereich (40) aufweist, in welchem ein Verschlusselement (41,42) in eine Anschlussöffnung (13) des ersten oder zweiten Wandelements (12) eingesetzt ist und gasdicht mit diesem Wandelement (12) verbunden ist, wobei diese gasdichte Verbindung eine stoffschlüssige Verbindung ist.

2. Bauteil (1) nach Anspruch 1, bei welchem die stoffschlüssige Verbindung zwischen dem Verschlusselement (41,42) und dem umgebenden Wandelement (12) eine Lötverbindung ist.

3. Bauteil (1) nach Anspruch 1 oder 2, bei welchem das erste Wandelement (11) eine geringere Wandstärke aufweist als das zweite Wandelement (12),
wobei das Verschlusselement (41,42) in das zweite Wandelement (12) eingesetzt ist.

4. Bauteil (1) nach einem der vorhergehenden Ansprüche, bei welchem der monolithische Verbund aus dem ersten Wandelement (11), dem zweiten Wandelement (12) und der dazwischen angeordneten Gitterstruktur (20) aus einem metallischen Material gebildet ist.

5. Bauteil (1) nach einem der Ansprüche 1 bis 4, bei welchem das Verschlusselement als Dichtkegel (41) ausgebildet ist und die Anschlussöffnung (13) sich zur Aufnahme des Dichtkegels (41) zu einer Außenfläche (12a) des Bauteils (1) hin konisch aufweitet.

6. Bauteil (1) nach einem der Ansprüche 1 bis 4, bei welchem das Verschlusselement ein Rohrabschnitt (42) ist, welcher optional mit einem Gewinde (51,52) ausgestaltet ist.

7. Bauteil (1) nach einem der vorhergehenden Ansprüche, welches im Verschlussbereich (40) eine oberflächenvergrößernde Einrichtung (17,18,51,53) als Teil des Verschlusselements (41,42) und/oder des ersten oder zweiten Wandelements (12) aufweist.

8. Bauteil (1) nach einem der vorhergehenden Ansprüche, bei welchem die Gitterstruktur (20) von wenigstens einer Zwischenwand (31,32) durchsetzt ist, welche zwischen dem ersten Wandelement (11) und dem zweiten Wandelement (12) und jeweils beabstandet zu diesen beiden Wandelementen (11,12) angeordnet ist.

9. Bauteil (1) nach Anspruch 8, bei dem die jeweilige Zwischenwand (31,32) zu den jeweils benachbarten Wandelementen (11,12) und/oder anderen benachbarten Zwischenwänden (32,31) einen Wandabstand (d) im Bereich zwischen 1 mm und 25 mm aufweist.

10. Bauteil (1) nach einem der Ansprüche 8 oder 9, bei welchem die jeweilige Zwischenwand (31,32) eine Wandstärke (t31,t32) im Bereich zwischen 0,1 mm und 4 mm aufweist.

11. Bauteil (1) nach einem der Ansprüche 8 bis 10, bei welchem die Gitterstruktur (20) auf der einen Seite der Zwischenwand (31) gegenüber der Gitterstruktur (20) auf der anderen Seite der Zwischenwand (31) einen Versatz (o) aufweist.

12. Bauteil (1) nach einem der vorhergehenden Ansprüche, bei welchem die Gitterstruktur (20) einen Material-Füllgrad im Bereich unterhalb von 40 % aufweist.

13. Verfahren zu Herstellung eines Bauteils (1) nach einem der vorhergehenden Ansprüche mit den folgenden Schritten:
a) additive Herstellung des ersten Wandelements (11), des zweiten Wandelements (12) und der zwischen diesen beiden Wandelementen angeordneten Gitterstruktur (20) in einem gemeinsamen Verfahrensschritt, so dass ein monolithischer Aufbau erzeugt wird,
b) Einsetzen des Verschlusselements (41,42) in eine Anschlussöffnung (13) des ersten oder zweiten Wandelements (12) und
c) Ausbilden einer stoffschlüssigen gasdichten Verbindung zwischen dem Verschlusselement (41,42) und dem umgebenden Wandelement (12).

14. Verfahren nach einem der Ansprüche 12 oder 13, bei welchem auch das Verschlusselement (41,42) additiv gefertigt wird, insbesondere gleichzeitig mit dem monolithischen Verbund aus dem ersten Wandelement (11), dem zweiten Wandelement (12) und der dazwischen angeordneten Gitterstruktur (20) in einem gemeinsamen Fertigungsschritt.

15. Computerprogrammprodukt umfassend Befehle, wobei die Befehle einen Computer bei der Ausführung des Computerprogrammprodukts dazu veranlassen, ein Verfahren zur Auslegung eines Bauteils (1) nach einem der Ansprüche 1 bis 13 auszuführen, wobei das Auslegungsverfahren die folgenden Schritte umfasst:
a) Bereitstellung eines physikalischen Modells für das Bauteil (1),
b) Festlegung eines Auslegungs-Parametersatzes mit wenigstens einem variablen geometrischen Auslegungs-Parameter für das Bauteil (1),
c) Festlegung von einem Zielwert für wenigstens eine physikalische Eigenschaft des Bauteils (1),
d) computergestützte Durchführung von wenigstens einer Simulation unter Verwendung des physikalischen Modells, wobei die wenigstens eine physikalische Eigenschaft des Bauteils (1) in Abhängigkeit des Auslegungs-Parametersatzes berechnet wird,
e) Bestimmung von wenigstens einem geeigneten Auslegungs-Parametersatz im Hinblick auf die Erreichung des Zielwertes für die wenigstens eine physikalische Eigenschaft auf Basis der Simulation.
